# EUROPEAN PATENT APPLICATION

(11) **EP 3 693 968 A1**
(43) Date of publication of application: **12.08.2020**
(21) Application number: 18864862.0
(22) Date of filing: 03.10.2018
(51) Int. Cl.: G11B 7/24024, G11B 7/2534, G11B 7/26

(54) **OPTICAL DISC AND METHOD FOR MANUFACTURING SAME**

(30) Priority: 06.10.2017 US 201762569036 P; 21.11.2017 JP 2017224089
(71) Applicant: CMC Magnetics Corporation, Taiwan 104 (TW)
(72) Inventor: USHIJIMA, Masaki, Tokyo 103-0021 (JP); MORIWAKI, Yu, Tokyo 103-0021 (JP); TAKETOMI, Tomoyuki, Tokyo 100-8251 (JP); KIYONO, Kenjiro, Tokyo 100-8251 (JP)
(74) Representative: Nordmeyer, Philipp Werner
(86) International application number: PCT/JP2018/037058
(87) International publication number: WO 2019/069984

(57) **Abstract**

Conventionally, in making a double-sided optical disc by attaching recording substrates to each other via an ultraviolet curable adhesive layer, there was a problem that the ultraviolet curable adhesive layer was slow to cure. It is thought that this is because the out gases leached from the recording substrate disturbed the cure reaction of the adhesive layer. In contrast, in the optical disc of the present disclosure, it is possible to cure the adhesive layer in a short time in attaching the recording substrates to each other via the ultraviolet curable adhesive layer, by providing a gas barrier layer at an attachment surface of a substrate to inhibit out gases from leaching from the substrate to the ultraviolet curable adhesive layer.

## Description

### FIELD

The present application discloses double-sided optical discs and methods for manufacturing the same.

### BACKGROUND

Optical discs, whose operational cost is low, are required to have high capacity as record media for long-time storage of infrequently accessed data. As a kind of high capacity optical discs, double-sided optical discs, where two recording substrates are attached to each other, are known. The double-sided optical discs may be manufactured, for example, as disclosed in Patent Literatures 1 and 2, by attaching a pair of recording substrates to each other, each having a recording layer on one surface side of a substrate and an attachment surface on the other surface side of the substrate, via an ultraviolet curable adhesive layer.

### Citation List

### Patent Literature

Patent Literature 1: JP 2015-197936 A
Patent Literature 2: JP 2017-174487 A

### SUMMARY

### Technical Problem

According to a new finding of the inventors of the present application, there is a problem that the ultraviolet curable adhesive layer is slow to cure in attaching the recording substrates to each other.

### Solution to Problem

The present application discloses, as a means to solve the above problem, an optical disc including a pair of recording substrates each having a recording layer on one surface side of a substrate, and an attachment surface on the other surface side of the substrate, the recording substrates being attached to each other, wherein: the recording substrates are attached to each other via an ultraviolet curable adhesive layer; and each recording substrate includes a gas barrier layer on the other surface side of the substrate.

"Gas barrier layer" means a layer having a lower gas permeability than the substrate constituting the above recording substrate, which can inhibit gases from leaching from the recording substrate to the ultraviolet curable adhesive layer. The gas barrier layer may be a layer consisting of organic substances, a layer consisting of inorganic substances, and a layer consisting of a mixture of organic and inorganic substances.

In the optical disc of the present disclosure, it is preferred that the gas barrier layer have a shape corresponding to the shape of the recording layer in planner view, and the gas barrier layer have an inner diameter equal to or smaller than the inner diameter of the recording layer and/or the gas barrier layer have an outer diameter equal to or larger than the outer diameter of the recording layer.

In the optical disc of the present disclosure, it is preferred that the gas barrier layer have a shape corresponding to the shape of the substrate in planner view; the optical disc include an area (X) where the gas barrier layer is not formed at the inner circumference of the substrate, and/or an area (Y) where the gas barrier layer is not formed at the outer circumference of the substrate, the edge of the inner circumference of the area (X) coincide with the edge of the inner circumference of the substrate, the edge of the outer circumference of the area (X) be located between 0.2 mm to 22.5 mm from the edge of the inner circumference of the substrate, the edge of the outer circumference of the area (Y) coincide with the edge of the outer circumference of the substrate, and the edge of the inner circumference of the area (Y) be located between 0.2 mm to 3.0 mm from the edge of the outer circumference of the substrate.

In the optical disc of the present disclosure, it is preferred that the gas barrier layer consist of at least one kind of inorganic substance selected from metals, metal oxides, metal nitrides, and metal sulfides.

In the optical disc of the present disclosure, it is preferred that the gas barrier layer be 2 nm to 200 nm in thickness.

In the optical disc of the present disclosure, it is preferred that the gas barrier layer have a refractive index of 1.4 to 3.0.

In the optical disc of the present disclosure, it is preferred that the gas barrier layer have an extinction coefficient of no more than 1.

In the optical disc of the present disclosure, it is preferred that the substrate consist of a polycarbonate resin.

In the optical disc of the present disclosure, it is preferred that the recording substrate have a transmittance of no more than 3% when transmitting light with a wavelength of 360 nm.

In the optical disc of the present disclosure, it is preferred that the recording layer include a metal layer of no less than 30 nm in thickness.

In the optical disc of the present disclosure, it is preferred that the recording substrate be 400 µm to 1400 µm in thickness.

In the optical disc of the present disclosure, it is preferred that the ultraviolet curable adhesive layer be 10 µm to 100 µm in thickness.

The present application discloses, as a means to solve the above problem, a method for manufacturing an optical disc including: a first step of forming a recording layer on one surface side of a substrate and a gas barrier layer on the other surface side of the substrate, to obtain a recording substrate; and a second step of preparing two of the recording substrates and attaching the recording substrates to each other at the other surface side of the substrate as an attachment surface, via a radical polymerization type ultraviolet curable adhesive layer.

In the method of the present disclosure, in the second step, it is preferred that ultraviolet be irradiated from the recording layer side of the recording substrate(s) and/or from the lateral side(s) of the recording substrates, to cure the radical polymerization type ultraviolet curable adhesive layer.

In the method of the present disclosure, in the second step, it is preferred that ultraviolet be irradiated from both the recording layer side of one of the recording substrates and the recording layer side of the other one of the recording substrates, to cure the radical polymerization type ultraviolet curable adhesive layer.

### Advantageous Effects of Invention

The ultraviolet curable adhesive layer cures quicker in attaching two recording substrates to each other in the case where the gas barrier layer is provided on the attachment surface side of the substrate than in the case where no gas barrier layer is provided. It is thought that this is because of the following mechanism. That is, it is thought, in attaching the recording substrates to each other via the ultraviolet curable adhesive layer without the gas barrier layer as in a conventional manner, the gases (air, water vapor, etc.) contained in the recording substrates leach as out gases to the ultraviolet curable adhesive layer, then the out gases disturb the curing reaction of the ultraviolet curable adhesive layer. The optical disc of the present disclosure provides a gas barrier layer on the attachment surface side of the recording substrate, which can inhibit out gases from leaching from the recording substrate to the ultraviolet curable adhesive layer, and it is thought that this makes the ultraviolet curable adhesive layer cure quicker.

### BRIEF DESCRIPTION OF DRAWINGS

Fig. 1 includes schematic views to explain one example of the structure of an optical disc.
Fig. 2 is a schematic view to explain one example of the structure of a recording substrate.
Fig. 3 includes schematic views to explain one example of the positional relationship between a substrate and a gas barrier layer.
Fig. 4 is a schematic view to explain one example of the positional relationship between a recording layer and the gas barrier layer.
Fig. 5 is a view to explain one example of the flow of a method for manufacturing an optical disc.
Fig. 6 includes schematic views to explain one example of the method for manufacturing an optical disc.
Fig. 7 includes schematic views to explain one example of the method for manufacturing an optical disc.
Fig. 8 is a graph to show light transmission spectrum of the recording substrate used in Examples.
Fig. 9 includes schematic views to explain the effect of Examples.
Fig. 10 includes schematic views to explain the effect of Examples.

### DETAILED DESCRIPTION OF EMBODIMENTS

### 1. Optical disc 100

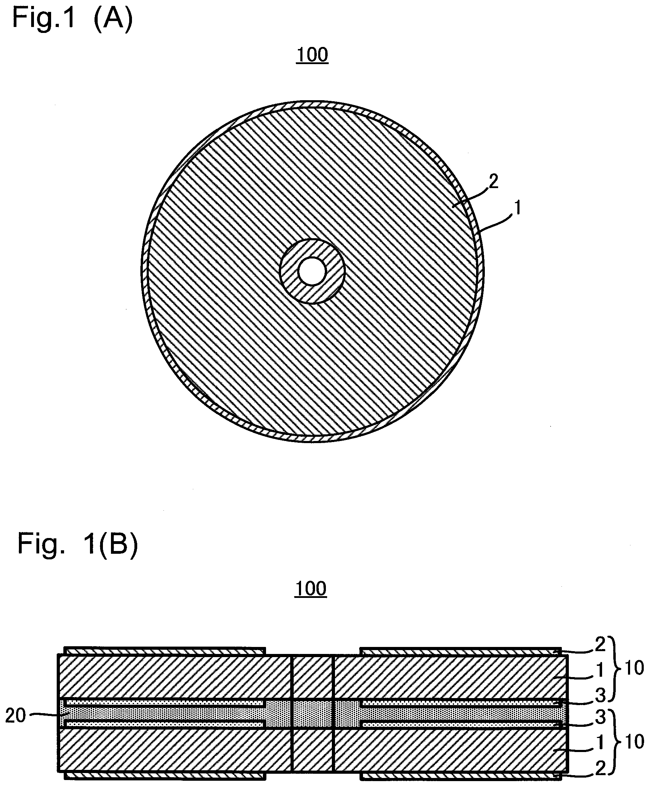

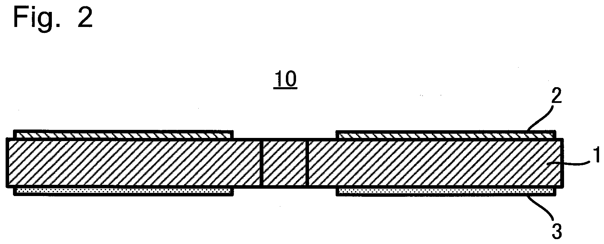

Fig. 1 includes views schematically showing the structure of an optical disc 100. Fig. 1(A) is a plan view, and Fig. 1(B) is a cross-sectional view. As shown in Fig. 1, the optical disc 100 includes a pair of recording substrates 10, 10 each including a recording layer 2 on one surface side of a substrate 1 and an attachment surface on the other surface side of the substrate 1. The recording substrates 10, 10 are attached to each other. As shown in Fig.1, in the optical disc 100, the recording substrates 10, 10 are attached to each other via an ultraviolet curable adhesive layer 20. Fig. 2 schematically shows the structure of the recording substrate 10 of the optical disc 100. As shown in Fig. 2, the recording substrate 10 includes a gas barrier layer 3 on the other surface side of the substrate 1.

### 1.1. Recording substrate 10

As shown in Fig. 2, the recording substrate 10 includes the substrate 1, the recording layer 2 provided on one surface side of the substrate 1, and the gas barrier layer 3 provided on the other surface side of the substrate 1. The other surface side of the substrate 1 is an attachment surface.

### 1.1.1. Substrate 1

Any known substrates for optical discs may be applied as the substrate 1. The material of the substrate 1 may be any materials that can secure the function as an optical disc. Examples thereof include acrylic resins, methacrylic resins, polycarbonate resins, polyolefin resins (particularly amorphous polyolefin), polyester resins, polystyrene resins, and epoxy resins. Among them, polycarbonate resins are preferable in view of strength, transparency, etc. The shape of the substrate 1 may be adequately determined in accordance with the standard. Preferred examples of the shape include a discoid shape having a hole at the center in planner view. The thickness of the substrate 1 is not particularly limited. Preferred examples of the thickness include 300 µm to 1300 µm in view of strength, transparency, etc. The lower limit is more preferably no less than 450 µm.

### 1.1.2. Recording layer 2

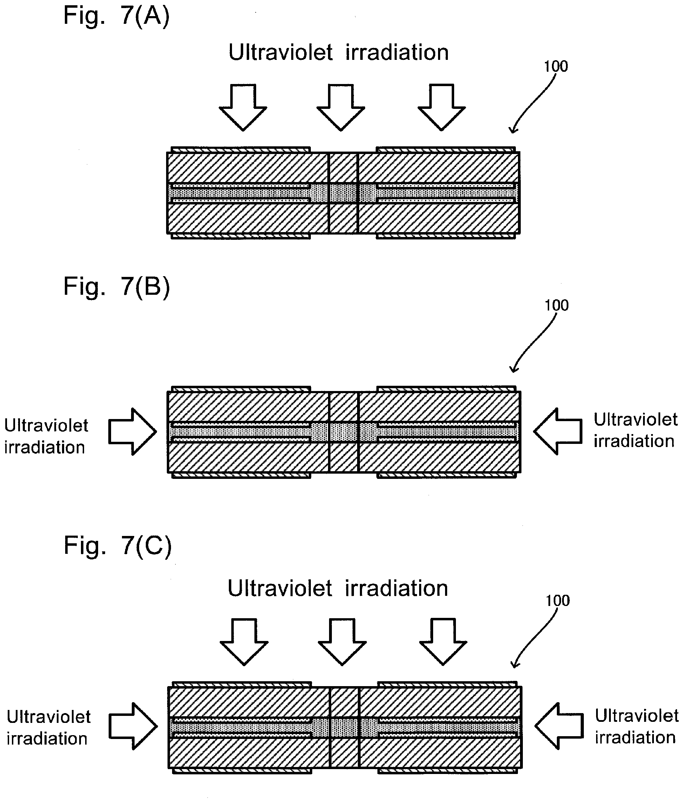

Any known recording layers of optical discs may be applied as the recording layer 2. The recording layer 2 may have a multilayer structure. The technique of the present disclosure is effective for both semi-transparent non-rewritable discs and opaque rewritable discs. In the case of non-rewritable discs, the recording layer 2 includes a semi-transparent oxide layer. On the other hand, in the case of rewritable discs, the recording layer 2 includes an opaque metal layer. Specifically, it is preferred that the recording layer 2 include a metal layer of no less than 30 nm in thickness. Even in the case of having a thick metal layer like this, the technique of the present disclosure can properly cure the ultraviolet curable adhesive layer 20. For example, according to the finding of the inventors of the present application, even in an opaque rewritable disc having a metal layer, ultraviolet passes through the metal layer with a small transmittance. Using such a small amount of ultraviolet, it is possible to quickly cure the ultraviolet curable adhesive layer 20 explained later. Alternatively, because the technique of the present disclosure may also be applied in the case of irradiating ultraviolet from the lateral side(s) of the optical disc (see Fig. 7(B)), it is possible to make ultraviolet pass through the ultraviolet curable adhesive layer 20 with or without the metal layer of the recording layer 2.

### 1.1.3. Gas barrier layer 3

The gas barrier layer 3 is a layer having a lower gas permeability than the substrate 1 of the recording substrate 10, which can inhibit gases from leaching from the recording substrate 10 to the ultraviolet curable adhesive layer 20. The gas barrier layer 3 may be a layer consisting of organic substances, a layer consisting of inorganic substances, and a layer consisting of a mixture of organic and inorganic substances. Examples of the organic substance that may form the gas barrier layer 3 include polyamide resins, epoxy resins, ethylene-vinylalcohol copolymer, and polyvinylidene chloride. Examples of the inorganic substance that may form the gas barrier layer 3 include metals, metal oxides, metal nitrides, and metal sulfides.

It is preferred that the gas barrier layer 3 consist of at least one kind of inorganic substance selected from metals, metal oxides, metal nitrides, and metal sulfides. This is because a high gas barrier property may be secured with a thin layer of these substances. Specifically, it is preferred that the gas barrier layer 3 consist of one or more kinds of inorganic substance selected from the group consisting of metals such as aluminum, silicon, titanium, niobium, silver, and alloys whose major component is the above-mentioned metals; metal oxides such as magnesium oxide, aluminum oxide, silicon oxide, titanium oxide, vanadium oxide, chromium oxide, zinc oxide, gallium oxide, germanium oxide, yttrium oxide, zirconium oxide, niobium oxide, molybdenum oxide, indium oxide, tin oxide, antimony oxide, tellurium oxide, hafnium oxide, tantalum oxide, tungsten oxide, and bismuth oxide; metal nitrides such as aluminum nitride and silicon nitride; and metal sulfides such as zinc sulfide and molybdenum disulfide.

Among them, it is more preferred that the gas barrier layer 3 consist of at least one kind of inorganic substance selected from metal oxides and metal nitrides, because they have good transparency and can more efficiently make ultraviolet pass through the ultraviolet curable adhesive layer 20 described later. Specifically, it is more preferred that the gas barrier layer 3 consist of one or more kinds of inorganic substance selected from the group consisting of aluminum oxide, silicon oxide, titanium oxide, chromium oxide, zinc oxide, gallium oxide, germanium oxide, zirconium oxide, niobium oxide, indium oxide, tin oxide, tantalum oxide, aluminum nitride, and silicon nitride. It is especially preferred that the gas barrier layer 3 consist of one or more kinds of inorganic substance selected from the group consisting of aluminum oxide, silicon oxide, titanium oxide, zinc oxide, zirconium oxide, niobium oxide, indium oxide, tin oxide, aluminum nitride, and silicon nitride.

The thickness of the gas barrier layer 3 is not particularly limited. A thick gas barrier layer 3 has a good gas barrier property. A thin gas barrier layer 3 has a good transparency. Considering having both gas barrier property and transparency and so on, it is preferred that the thickness of the gas barrier layer 3 be 2 nm to 200 nm. The lower limit is more preferably no less than 3 nm, and further preferably no less than 5 nm. The upper limit is more preferably no more than 50 nm, and further preferably no more than 30 nm.

The refractive index of the gas barrier layer 3 is not particularly limited, and preferably the difference in refractive index between the gas barrier layer 3 and the substrate 1 is small in view of further increasing optical effect. For example, it is preferred that the refractive index of the gas barrier layer 3 be 1.4 to 3.0. The upper limit is more preferably no more than 2.5, and further preferably no more than 2.3. Or, it is preferred that the difference in refractive index between the gas barrier layer 3 and the substrate 1 be no more than 1.4. The difference is more preferably no more than 0.9, and further preferably no more than 0.7.

The extinction coefficient of the gas barrier layer 3 is not particularly limited, and preferably no more than 1 in view of further increasing optical effect. The upper limit is more preferably no more than 0.5, and further preferably no more than 0.1.

1.1.4. Positional relationship between substrate 1 and gas barrier layer 3

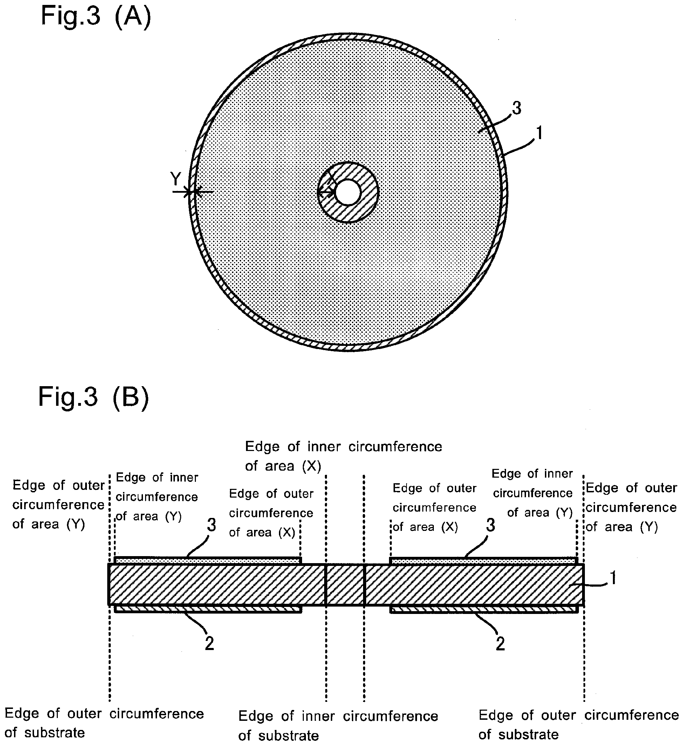

In the optical disc 100, it is preferred that the gas barrier layer 3 have a shape corresponding to the shape of the substrate 1 in planner view. That is, as shown in Fig. 3(A), when the substrate 1 in planner view has a discotic shape having a hole at the center, it is preferred that the gas barrier layer 3 also have a discotic shape having a hole at the center. In this case, it is preferred that an area where the gas barrier layer 3 is not formed be provided at a part of the substrate 1. According to the new finding of the inventors of the present application, providing such an area increases the adhesion strength between the recording substrate 10 and the ultraviolet curable adhesive layer 20. Specifically, as shown in Fig. 3(A), it is preferred that the optical disc 100 include an area (X) where the gas barrier layer 3 is not formed at the inner circumference of the substrate 1, and/or an area (Y) where the gas barrier layer 3 is not formed at the outer circumference of the substrate 1. It is more preferred that the gas barrier layer 3 especially have the area (Y). Specifically, as shown in Fig. 3(B), it is preferred that the edge of the inner circumference of the area (X) coincide with the edge of the inner circumference of the substrate 1, the edge of the outer circumference of the area (X) be located between 0.2 mm to 22.5 mm from the edge of the inner circumference of the substrate 1 (that is, the width of the area (X) in planner view is 0.2 mm to 22.5 mm), the edge of the outer circumference of the area (Y) coincide with the edge of the outer circumference of the substrate 1, and the edge of the inner circumference of the area (Y) be located between 0.2 mm to 3.0 mm from the edge of the outer circumference of the substrate 1 (that is, the width of the area (Y) in planner view is 0.2 mm to 3.0 mm). The edge of the outer circumference of the area (X) is located more preferably no less than 2.5 mm, further preferably no less than 4.5 mm, and more preferably no more than 16.5 mm, and further preferably no more than 10.5 mm from the edge of the inner circumference of the substrate 1. The edge of the inner circumference of the area (Y) is located more preferably no less than 0.5 mm, further preferably no less than 1.0 mm, and more preferably no more than 2.5 mm, further preferably no more than 2.0 mm, and particularly preferably 1.5 mm from the edge of the outer circumference of the substrate 1.

When an area where the gas barrier layer 3 is not formed is provided at a part of the substrate 1, it is preferred that the ratio of the area of the gas barrier layer 3 (A₃) to the area of the substrate 1 (A₁) in planner view (A₃/A₁) be 0.66 to 0.995. When the area (X) and/or the area (Y) is provided at the inner and/or outer circumference of the substrate 1, it is preferred that the ratio of the area of the area (X) (A_{3X}) to the area of the substrate 1 (A₁) in planner view (A_{3X}/A₁) be 0.00085 to 0.24, and the ratio of the area of the area (Y) (A_{3Y}) to the area of the substrate 1 (A₁) in planner view (A_{3Y}/A₁) be 0.00675 to 0.0995.

### 1.1.5. Positional relationship between recording layer 2 and gas barrier layer 3

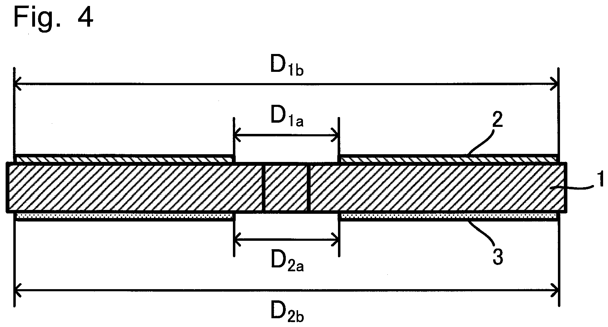

In the optical disc 100, it is preferred that the gas barrier layer 3 have a shape corresponding to the shape of the recording layer 2 in planner view. That is, as shown in Figs. 1 to 4, when the recording layer 2 has a discotic shape having a hole at the center in planner view, it is preferred that the gas barrier layer 3 also have a discotic shape having a hole at the center. In this case, it is preferred that the inner diameter of the gas barrier layer 3 be equal to or smaller than the inner diameter of the recording layer 2, and/or the outer diameter of the gas barrier layer 3 be equal to or larger than the outer diameter of the recording layer 2. That is, it is preferred that the relationship between the inner dimeter of the recording layer 2 D₁ₐ and the inner diameter of the gas barrier layer 3 D₂ₐ shown in Fig. 4 be D₁ₐ ≥ D₂ₐ and the relationship between the outer diameter of the recording layer 2 D_{1b} and the outer diameter of the gas barrier layer 3 D_{2b} be D_{2b} ≥ D_{1b}. Adjusting the positional relationship between the recording layer 2 and the gas barrier layer 3 like this can inhibit the out gases from leaching from the substrate to the ultraviolet curable adhesive layer, whereby it is possible to quickly cure the adhesive layer with a small amount of ultraviolet that passes through the recording layer.

### 1.2. Ultraviolet curable adhesive layer 20

The ultraviolet curable adhesive layer 20 includes an ultraviolet curable resin. Specific examples of the ultraviolet curable resin are not particularly limited, and any common ultraviolet resins may be employed. Examples thereof include cationic polymerization type and radical polymerization type ultraviolet curable resins. Specifically, radical polymerization type ultraviolet curable resins are preferable. The thickness of the ultraviolet curable adhesive layer 20 is not particularly limited either, and may be a thickness with which it is possible to properly attach the recording substrates 10, 10 to each other. Considering having both adhesion strength and easy cure and so on, it is preferred, for example, that the thickness of the ultraviolet curable adhesive layer 20 be 10 µm to 100 µm.The lower limit is more preferably no less than 20 µm, upper limit is more preferably no more than 80 µm, and especially preferably the thickness is 40 µm.It is preferred that the ultraviolet curable adhesive layer 20 be provided over whole surface of the attachment surface of the recording substrate 10.

### 1.3. Others

As described above, the recording substrate 10 may be a semi-transparent non-rewritable disc and may be an opaque rewritable disc, and preferably be an opaque rewritable disc because it remarkably exerts the effect of the present invention. Specifically, it is preferred that the recording substrate 10 have a transmittance of no more than 3% when transmitting light with a wavelength of 360 nm. The transmittance is more preferably no more than 1%. The lower limit is not particularly limited, and preferably no less than 0.01%. The technique of the present disclosure can properly cure the ultraviolet curable adhesive layer 20 even though the recording layer 2 is opaque and the ultraviolet transmittance of the recording substrate 10 is very small.

The thickness of the recording substrate 10 (thickness as a whole including the substrate 1, the recoding layer 2 and the gas barrier layer 3) is not particularly limited, and for example it is preferably 400 µm to 1400 µm in view of optical property, strength, etc. The lower limit is more preferably no less than 550 µm.

The recording substrate 10 may include another layer in addition to the substrate 1, the recording layer 2, and the gas barrier layer 3, as long as the above problem can be solved. Examples of such a layer include a cover layer to protect the recording layer 2, a hard coat layer to prevent scratches and dirt on the surface for reading, and a layer to improve the adhesion between the gas barrier layer 3 and the ultraviolet curable adhesive layer 20.

### 2. Manufacturing method of optical disc S10

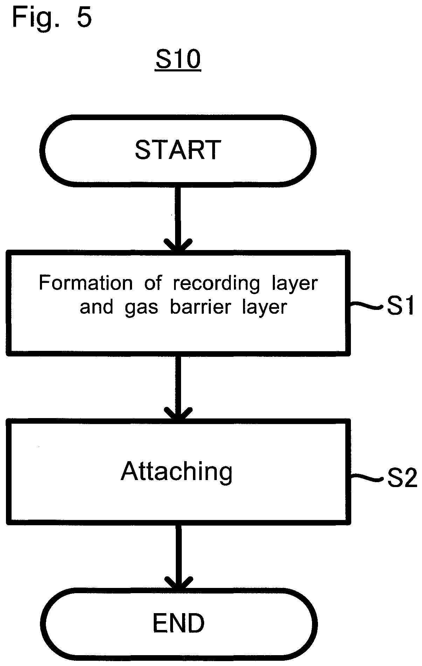

The method S10 for manufacturing the optical disc 100 shown in Fig. 5 includes a first step S1 of forming a recording layer 2 on one surface side of a substrate 1 and a gas barrier layer 3 on the other surface side of the substrate 1, to obtain a recording substrate 10, and a second step S2 of preparing two of the recording substrates 10, 10, and attaching the recording substrates 10, 10 to each other at the other surface side of the substrate as an attachment surface, via a radical polymerization type ultraviolet curable adhesive layer 20.

### 2.1. First step S1

In the first step S1, the recording layer 2 is formed on one surface side of the substrate 1, and the gas barrier layer 3 is formed on the other surface side of the substrate 1, whereby the recording substrate 10 is obtained. The order of forming the recording layer 2 and forming the gas barrier layer 3 is not particularly limited, and either one may be formed first.

Methods for forming the recording layer 2 on one surface side of the substrate 1 are known, and detailed explanation thereof is omitted here. On the other hand, regarding the method for forming the gas barrier layer 3 on the other surface side of the substrate 1, a best suited method may be selected depending on the material of the gas barrier layer 3. For example, when a layer consisting of organic substances or a layer consisting of a mixture of organic and inorganic substances is provided as the gas barrier layer 3, a method of applying a coating liquid including the organic substances etc. over the other surface side of the substrate 1, followed by drying and curing, a method of synthesis and film formation of the organic substances etc. on the surface of the substrate 1, and the like may be employed. On the other hand, when a layer consisting of inorganic substances is provided as the gas barrier layer 3, various kinds of film formation method such as evaporation, spattering, CVD, and ALD may be employed. Spattering is especially preferable.

### 2.2. Second step S2

In the second step S2, two of the recording substrates 10, 10 are prepared and attached to each other at the other surface side of the substrate 1 as an attachment surface, via the radical polymerization type ultraviolet curable adhesive layer 20.

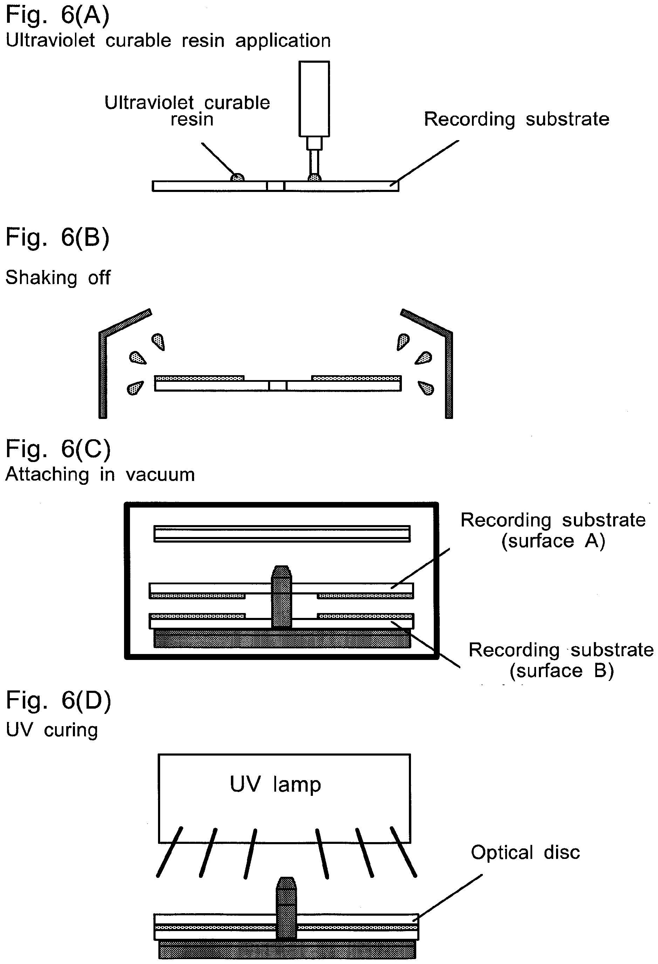

The second step S2 may be carried out in the flow as shown in Fig. 6 for example. That is, an ultraviolet curable resin is applied over the attachment surface of the recording substrate 10 by spin coat (Fig. 6(A)), excess resin is shaken off (Fig. 6(B)), then, the recording substrates 10, 10 with the ultraviolet curable resin are attached to each other in vacuum (Fig. 6(C)), after that, ultraviolet is irradiated to the recording substrate 10 with an ultraviolet lamp etc. to cure the ultraviolet curable resin (Fig. 6(D)). The flow of Figs. 6 (A) to (D) itself is obvious to a person skilled in the art, and further explanation is omitted.

Here, the direction to irradiate ultraviolet to the recording substrate 10 is not particularly limited. For example, as shown in Fig. 7, in the second step S2, ultraviolet may be irradiated from the recording layer 2 side of the recording substrate 10 (Fig. 7(A)), or from the lateral side(s) of the recording substrate 10 (Fig. 7(B)), to cure the radical polymerization type ultraviolet curable adhesive layer 20. Ultraviolet may also be irradiated from both the recording layer 2 side of the recording substrate 10 and the lateral side(s) of the recording substrate 10 (Fig. 7(C)).

Specifically, in the second step S2, it is preferred that ultraviolet be irradiated from both the recording layer 2 side of one of the recording substrates 10, 10 and the recording layer 2 side of the other one of the recording substrates 10, 10, to cure the radical polymerization type ultraviolet curable adhesive layer 20. Further, it is more preferred that these irradiations be combined with the method of irradiating ultraviolet from the lateral side(s) of the recording substrates 10, 10.

As explained above, according to the optical disc 100, it is possible to inhibit out gases from leaching from the recording substrate 10 to the ultraviolet curable adhesive layer 20 by providing the gas barrier layer 3 on the attachment surface side of the recording substrate 10, whereby it is possible to cure the ultraviolet curable adhesive layer 20 in attaching the recording substrates 10, 10 to each other quicker than the case without the gas barrier layer 3.

### Examples

### 1. Preparation of rewritable recording substrate and identification of light transmission spectrum

An opaque rewritable recording substrate including a metal layer was made, and light transmission spectrum thereof was identified.

The above-described rewritable recording substrate was made by the following processes. First, a polycarbonate substrate of 0.5 mm in thickness having grooves was made by injection molding. Second, a recording layer was formed as a film on the substrate by spattering. The recording layer was formed from a plurality of layers, which are shown below.

Sn-Zn-In-Si-O 6nm; Ag-Cu-Nd 70 nm; CrTaO-SiO₂ 8 nm; ZnS-SiO₂ 2 nm; GeInSbTe 26 nm; ZrO₂-ZnS 5 nm; ZnS-SiO₂ 28 nm

The recording substrate was made by forming, by spin coat, on the recording layer, a cover layer to protect the recording layer and a hard coat layer to prevent scratches and dirt on the surface for reading, each consisting of ultraviolet curable resin, and whose total thickness was 100 µm.

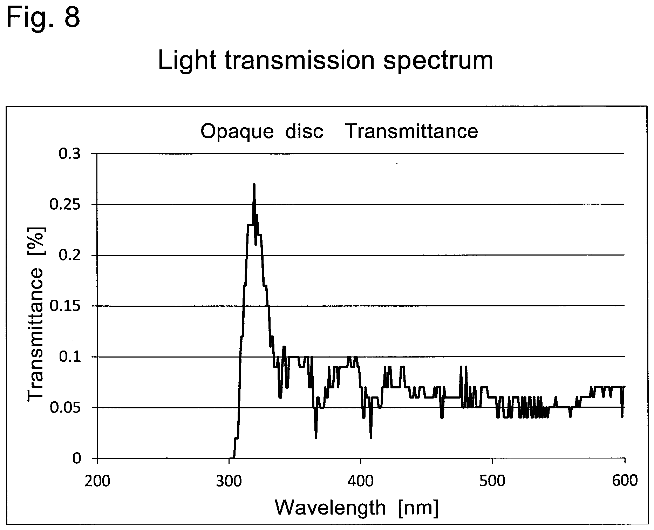

The light transmissive spectrum of the rewritable recording substrate is shown in Fig. 8. As shown in Fig. 8, it can be seen that ultraviolet passes through the opaque rewritable recording substrate having a metal layer, even though the transmittance thereof is small. The followings are examinations to check if the recording substrates can be attached to each other with ultraviolet curable resin even with such a small amount of ultraviolet.

### 2. Preparation and evaluation of optical disc according to Comparative Example 1

Two of the above-described rewritable recording substrates were prepared. Having the surface opposite from the recording layer as the attachment surface, the recording substrates were attached to each other with ultraviolet curable resin (radical polymerization type, SK6570 manufactured by Dexerials Corporation) in the flow shown in Fig. 6. The direction to irradiate ultraviolet was the direction shown in Fig. 7(A), the illuminance of ultraviolet was 100 mW/cm², and the irradiation time was 4 seconds. The thickness of the ultraviolet curable resin (distance between the attachment surfaces of the two recording substrates) was 40 µm.As a result, the curing reaction of the ultraviolet curable resin did not proceed sufficiently, and some uncured part was made over nearly whole adhesive layer. As a result of intensive studies, the inventors of the present application thought that gases (air, water vapor, etc.) contained in the substrate disturb the curing reaction of the ultraviolet curable resin. That is, they thought that it is possible to speed up the curing of the ultraviolet curable resin by providing a gas barrier layer on the opposite surface of the substrate from the recording layer to limit influence from out gases.

### 3. Confirmation of out gas inhibition effect by gas barrier layer

### 3.1. Example 1

A sputtered thin film of metal oxide consisting of Sn-Zn-In-Si-O (thickness 9 nm) was provided as the gas barrier layer on the opposite surface of the above-described rewritable recording substrate from the recording layer. In Example 1, the inner diameter of the substrate (diameter of the hole) was 15 mm, the outer diameter of the substrate was 120 mm, the inner diameter of the recording layer D₁ₐ was 35 mm, the outer diameter of the recording layer D_{1b} was 119 mm, the inner diameter of the gas barrier layer D₂ₐ was 43 mm, and the outer diameter of the gas barrier layer D_{2b} was 119 mm. Two of the recording substrates each provided with a sputtered thin film were prepared in the same manner. Each having the opposite surface of the recording substrate from the recording layer as the attachment surface, the recording substrates were attached to each other with the ultraviolet curable resin in the same way as in Comparative Example 1, whereby an optical disc of Example 1 was obtained.

### 3.2. Example 2

An optical disc of Example 2 was obtained by attaching the recording substrates to each other with the ultraviolet curable resin in the same way as in Example 1, except that the direction to irradiate ultraviolet was changed to the directions shown in Fig. 7(B).

### 3.3. Visual observation

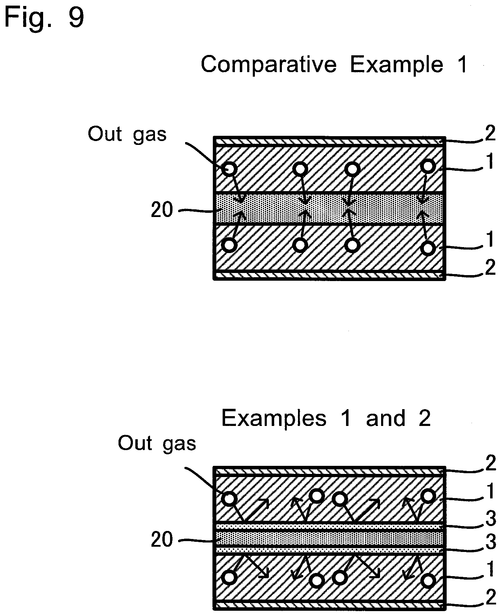

In both the optical discs of Examples 1 and 2, the curing reaction of the ultraviolet curable resin sufficiently proceeded at the area where the gas barrier layer was provided in planner view, but there was an uncured part in the ultraviolet curable resin at the area where the gas barrier was not provided in planner view like Comparative Example 1. As explained above, the effect of the gas barrier layer was confirmed. That is, as shown in Fig. 9, in Comparative Example not having the gas barrier layer 3, it is thought that out gases leach from the recording substrate 10 to the ultraviolet curable adhesive layer 20 and disturb the curing reaction of the ultraviolet curable resin. On the other hand, in Examples having the gas barrier layer 3, it is thought that leaching of the out gases from the recording substrate 10 to the ultraviolet curable adhesive layer 20 can be inhibited, and it is possible to quickly and properly cure the ultraviolet curable resin.

### 4. Confirmation of optical waveguide formation effect

### 4.1. Example 3

An optical disc of Example 3 was obtained by attaching the recording substrates to each other with the ultraviolet curable resin in the same way as in Example 2, expect that a sputtered thin film of alloy consisting of Ag-Cu-Nd (thickness 100 nm) was provided as the gas barrier layer.

### 4.2. Example 4

An optical disc of Example 4 was obtained by attaching the recording substrates to each other with the ultraviolet curable resin in the same way as in Example 2, expect that a sputtered thin film consisting of SiO₂ (thickness 12 nm) was provided as the gas barrier layer.

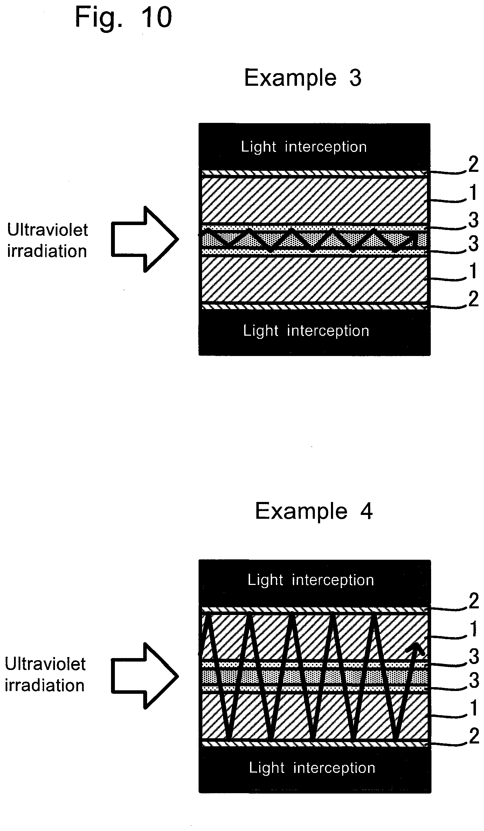

When the optical discs of Examples 3 and 4 were compared to each other, the ultraviolet curable resin of the optical disc in Example 4 cured quicker than that in Example 3. It is thought this is because of the following mechanism. That is, as shown in Fig. 10, in the optical disc of Example 3, because the gas barrier layer 3 consists of opaque Ag-Cu-Nd, ultraviolet was provided only from a small gap between one gas barrier layer 3 and the other gas barrier layer 3 to the ultraviolet curable adhesive layer 20. That is, it is thought that the entrance of ultraviolet is small, and ultraviolet is difficult to go further inside the ultraviolet curable adhesive layer 20 (center side of the disc). On the other hand, in the optical disc of Example 4, because the gas barrier layer 3 consists of semi-transparent SiO₂ and the difference in refractive index between the gas barrier layer 3 and the substrate 1 is small, ultraviolet can reflect and diffuse over the whole surfaces between one recording layer 2 and the other recording layer 2. That is, it is thought that ultraviolet was provided from a plurality of directions to the ultraviolet curable adhesive layer 20, which can efficiently cure the whole ultraviolet curable adhesive layer 20. It is thought that, from the above, it is preferred that metal oxides or metal nitrides, which are inorganic substances easily made to be transparent or semi-transparent, be employed as the gas barrier layer.

### 5. Adhesion strength check

### 5.1. Example 5

An optical disc of Example 5 was obtained by attaching the recording substrates to each other with the ultraviolet curable resin in the same way as in Example 1, except that the direction to irradiate ultraviolet was changed to the directions shown in Fig. 7(C).

### 5.2. Example 6

An optical disc of Example 6 was obtained by attaching the recording substrates to each other with the ultraviolet curable resin in the same way as in Example 5, except that an area (Y) where the gas barrier layer was not formed was provided in the manner shown below in providing the gas barrier layer on the substrate.
- The area (Y) where the gas barrier layer was not formed was provided at the outer circumference of the substrate.
- The edge of the outer circumference of the area (Y) was coincided with the edge of the outer circumference of the substrate.
- The edge of the inner circumference of the area (Y) was located 1.5 mm from the edge of the outer circumference of the substrate.

### 5.3. Visual observation

In both the optical discs of Examples 5 and 6, the curing reaction of the ultraviolet curable resin was sufficiently progressed at the area where the gas barrier layer was provided in planner view.

### 5.4. Evaluation of adhesion strength by disc drop test

Each of the optical discs of Examples 5 and 6 was subject to free-fall drop from the height of 76 cm, whereby presence or absence of chipping at the edge and peeling at the adhesion interface was checked. As a result, both the optical discs of examples 5 and 6 had an adhesion strength equal to or higher than conventional optical discs. Specifically, it was found that the optical disc of Example 6 had a higher adhesion strength than the optical disc of Example 5. It can be thought that in the optical disc of Example 5, the adhesion strength between the gas barrier layer and the ultraviolet curable adhesive layer is small. In contrast, it can be thought that, by providing an area where the gas barrier layer is not formed at a part of the substrate like in the optical disc of Example 6, it is possible to strongly attach a part of the ultraviolet curable adhesive layer to the polycarbonate substrate while properly curing the ultraviolet curable adhesive layer near the gas barrier layer, which improves the adhesion strength.

According to the tendency found by the inventors of the present application, it is preferred that the area where the gas barrier layer is not formed at the substrate be located in the following conditions, when considering the balance between the cure degree of the ultraviolet curable adhesive layer and the adhesion strength.
- An area (X) where the gas barrier layer is not formed at the inner circumference of the substrate and/or an area (Y) where the gas barrier layer is not formed at the outer circumference of the substrate is provided.
- The edge of the inner circumference of the area (X) is coincided with the edge of the inner circumference of the substrate.
- The edge of the outer circumference of the area (X) is located between 0.2 mm to 22.5 mm from the edge of the inner circumference of the substrate.
- The edge of the outer circumference of the area (Y) is coincided with the edge of the outer circumference of the substrate.
- The edge of the inner circumference of the area (Y) is located between 0.2 mm to 3.0 mm from the edge of the outer circumference of the substrate.

Although the effect provided where the gas barrier layer was provided in a rewritable optical disc was confirmed in the above Examples, it is thought that the technique of the present disclosure exerts an effect in non-rewritable optical discs too. That is, in the case of manufacturing a non-rewritable optical disc too, it is thought that out gases leach from the substrate to the ultraviolet curable adhesive layer when the ultraviolet curable adhesive layer cures, and disturb the curing action of the ultraviolet curable resin. By providing the gas barrier layer on the attachment surface side of the substrate, it is possible to inhibit out gases from leaching and to quickly cure the ultraviolet curable resin.

Although the case where a thin film of alloy consisting of Sn-Zn-In-Si-O or Ag-Cu-Nd, or SiO₂ was provided as the gas barrier layer was mainly explained in the above Examples, the material of the gas barrier layer is not limited thereto in the technique of the present disclosure. Regardless of whether it is organic or inorganic, any layer having gas barrier effect is thought to be able to exert desired effect. However, in view of properly transmitting ultraviolet, it is preferred that the gas barrier layer be transparent or semi-transparent. It is also preferred that the gas barrier layer secure a sufficient gas barrier property while be thin as much as possible. In this point, considering the transparency, gas barrier property and thickness, it is preferred that the gas barrier layer consist of inorganic substances, and more preferred that the layer consist of metal oxides and/or metal nitrides. It is noted that ultraviolet transparency of the gas barrier layer can be secured in the case where the gas barrier layer is a metal layer by making the metal layer thin as much as possible.

### Industrial Applicability

The optical disc according to the present invention can be utilized, for examples, as a high capacity record medium for long-time storage of infrequently accessed data.

### References Sign List

- 1: substrate
- 2: recording layer
- 3: gas barrier layer
- 10: recording substrate
- 20: ultraviolet curable adhesive layer
- 100: optical disc

## Claims

1. An optical disc comprising a pair of recording substrates each having a recording layer on one surface side of a substrate, and an attachment surface on the other surface side of the substrate, the recording substrates being attached to each other,
wherein:
the recording substrates are attached to each other via an ultraviolet curable adhesive layer; and
each recording substrate includes a gas barrier layer on the other surface side of the substrate.

2. The optical disc according to claim 1, wherein: the gas barrier layer has a shape corresponding to the shape of the recording layer in planner view; and the gas barrier layer has an inner diameter equal to or smaller than the inner diameter of the recording layer and/or the gas barrier layer has an outer diameter equal to or larger than the outer diameter of the recording layer.

3. The optical disc according to claim 1 or 2,
wherein:
the gas barrier layer has a shape corresponding to the shape of the substrate in planner view;
the optical disc includes an area (X) where the gas barrier layer is not formed at the inner circumference of the substrate and/or an area (Y) where the gas barrier layer is not formed at the outer circumference of the substrate;
an edge of the inner circumference of the area (X) coincides with an edge of the inner circumference of the substrate and an edge of the outer circumference of the area (X) is located between 0.2 mm to 22.5 mm from the edge of the inner circumference of the substrate; and
an edge of the outer circumference of the area (Y) coincides with an edge of the outer circumference of the substrate and an edge of the inner circumference of the area (Y) is located between 0.2 mm to 3.0 mm from the edge of the outer circumference of the substrate.

4. The optical disc according to any one of claims 1 to 3, wherein the gas barrier layer consists of at least one kind of inorganic substance selected from metals, metal oxides, metal nitrides, and metal sulfides.

5. The optical disc according to any one of claims 1 to 4, wherein the gas barrier layer is 2 nm to 200 nm in thickness.

6. The optical disc according to any one of claims 1 to 5, wherein the gas barrier layer has a refractive index of 1.4 to 3.0.

7. The optical disc according to any one of claims 1 to 6, wherein the gas barrier layer has an extinction coefficient of no more than 1.

8. The optical disc according to any one of claims 1 to 7, wherein the substrate consists of a polycarbonate resin.

9. The optical disc according to any one of claims 1 to 8, wherein the recording substrate has a transmittance of no more than 3% when transmitting light with a wavelength of 360 nm.

10. The optical disc according to any one of claims 1 to 9, wherein the recording layer includes a metal layer of no less than 30 nm in thickness.

11. The optical disc according to any one of claims 1 to 10, wherein the recording substrate is 400 µm to 1400 µm in thickness.

12. The optical disc according to any one of claims 1 to 11, wherein the ultraviolet curable adhesive layer is 10 µm to 100 µm in thickness.

13. A method for manufacturing an optical disc comprising:
a first step of forming a recording layer on one surface side of a substrate and a gas barrier layer on the other surface side of the substrate, to obtain a recording substrate; and
a second step of preparing two of the recording substrates and attaching the recording substrates to each other at the other surface side of the substrate as an attachment surface, via a radical polymerization type ultraviolet curable adhesive layer.

14. The method according to claim 13, wherein in the second step, ultraviolet is irradiated from the recording layer side of the recording substrate(s) and/or from the lateral side(s) of the recording substrates, to cure the radical polymerization type ultraviolet curable adhesive layer.

15. The method according to claim 14, wherein in the second step, ultraviolet is irradiated from both the recording layer side of one of the recording substrates and the recording layer side of the other one of the recording substrates, to cure the radical polymerization type ultraviolet curable adhesive layer.
